# FASCICULE DE BREVET EUROPEEN

(11) **EP 1 537 608 B1**
(45) Date de publication et mention de la délivrance du brevet: **21.11.2007**
(21) Numéro de dépôt: 03760731.4
(22) Date de dépôt: 17.06.2003
(51) Int. Cl.: H01L 41/04, F02D 41/20

(54) **PROCÉDÉ DE PILOTAGE ÉLECTRONIQUE D'UN DISPOSITIF DE COMMANDE D'UN ACTUATEUR PIÉZO-ÉLECTRIQUE**
VERFAHREN ZUM ELEKTRONISCHEN BETRIEB EINER STEUEREINRICHTUNG FÜR EIN PIEZOBETÄTIGUNGSGLIED
METHOD FOR ELECTRONIC OPERATION OF A CONTROL DEVICE FOR A PIEZOELECTRIC ACTUATOR

(30) Priorité: 21.06.2002 FR 0207705
(43) Date de publication de la demande: 08.06.2005
(73) Titulaire: RENAULT S.A.S., 92100 Boulogne Billancourt (FR)
(72) Inventeur: Ripoll, Christophe, F-78220 Viroflay (FR)
(74) Mandataire: Rougemont, Bernard
(86) Numéro de dépôt international: PCT/FR2003/001825
(87) Numéro de publication internationale: WO 2004/001868

(56) Documents cités:
- FR-A- 2 421 513
- FR-A- 2 652 960
- US-A- 4 749 897
- FABIJANSKI P: "Series resonant converter with sandwich-type piezoelectric ceramic transducers" 6TH EUROPEAN CONFERENCE ON POWER ELECTRONICS AND APPLICATIONS (EPE '95), SEVILLE, SPAIN, 19 - 21 septembre 1995, pages 591-594, vol.2, XP000537795
- FABIJANSKI P ET AL: "Series resonant converter with sandwich-type piezoelectric ceramic transducers" PROCEEDINGS OF THE IEEE INTERNATIONAL CONFERENCE ON INDUSTRIAL TECHNOLOGY (ICIT'96), SHANGHAI, CHINA, 2 - 6 décembre 1996, pages 252-256, XP010232625 ISBN: 0-7803-3104-4
- TATSUTA M ET AL: "1 MHz, 1 kW series resonant converter for ultrasonic transducer using the high frequency power SITs" 19TH ANNUAL IEEE POWER ELECTRONICS SPECIALISTS CONFERENCE (PESC '88), KYOTO, JAPAN, 11 - 14 avril 1988, pages 1236-1243, vol. 2, XP000042067 ISSN: 0275-9306

## Description

La présente invention concerne un procédé de pilotage électronique du dispositif de commande d'un actuateur piézo-électrique ultrasonore, et plus particulièrement d'un injecteur de carburant à étage piézo-éiectrique piloté par le calculateur d'injection électronique d'un moteur à combustion interne dans un véhicule automobile.

Plus précisément, le problème que vise à résoudre l'invention est le pilotage d'un dispositif de commande électronique provoquant l'excitation des cellules piézo-électriques pour faire vibrer la structure d'un injecteur, un tel dispositif étant décrit dans la demande de brevet français, déposée sous le numéro 01 14023 au nom de la Demanderesse. Un injecteur de carburant à étage piézo-électrique ultrasonore est destiné à pulvériser très finement le carburant, avec des gouttelettes calibrées pour assurer un dosage précis et suffisamment petites pour assurer la vaporisation complète et homogène du carburant injecté. Un tel injecteur comporte entre autres une buse cylindrique alimentée en carburant et à l'extrémité de laquelle est ménagé un orifice d'injection, et des moyens de mise en vibration cyclique de la buse, tel qu'un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente, au premier ordre, à une capacité dont la tension de chargement est élevée, supérieure à une centaine de volts. Ce transducteur est piloté en durée et en intensité par un dispositif de commande électronique, lui-même piloté par le système électronique de contrôle moteur pour réaliser une ouverture oscillante à fréquence ultrasonore du nez de la buse.

De plus, des circuits et procédés utilisant la même topologie pour commander des transducteurs piézo-électriques ultrasonores résonants sont connus par les travaux de P. Fabijanski (6th European Conference on Power Electronics and Applications, 1995, pages 591-594; IEEE International Conference on Industrial Technology, 1996, pages 252-256) et M. Tatsuta et al (19th Annual IEEE Power Electronics Specialists Conference, 1988, pages 1236-1243).

Le dispositif de commande électronique est destiné à générer un signal alternatif haute tension, supérieure à une centaine de volts, de fréquence élevée, supérieure à une dizaine de kiloHertz, pour exciter les cellules piézo-électriques à partir d'une source de tension continue. Dans un véhicule automobile, la batterie fournit une tension d'alimentation de valeur 12 ou 42 volts, ce qui implique d'augmenter cette tension par un convertisseur-élévateur de tension en courant continu DC-DC alimenté par la basse tension de la batterie.

Le but de la présente invention est de piloter électroniquement les interrupteurs de commande du dispositif de commande des injecteurs, qui sont distincts des interrupteurs de sélection des injecteurs, et cela par rapport à la charge constituée d'un transformateur, d'une inductance de résonance et d'un injecteur.

Pour cela, l'objet de l'invention est un procédé de pilotage électronique du dispositif de commande d'au moins un actuateur piézo-électrique ultrasonore, à partir d'un calculateur de contrôle qui comporte un convertisseur-élévateur de tension continue/alternative alimenté par une source de tension continue, dont la sortie haute tension est reliée à un circuit oscillant constitué de l'actuateur et d'une inductance de résonance, ledit convertisseur étant composé d'un montage avec au moins un transformateur à au moins un enroulement primaire relié à la source de tension par au moins un interrupteur commandable et un enroulement secondaire unique délivrant un signal alternatif d'excitation de l'actuateur piézo-électrique, caractérisé en ce que :
- la tension V_{c} aux bornes de la charge constituée du transformateur, de l'inductance de résonance et de l'actuateur est un signal carré de fréquence de découpage fr déterminée, et
- le courant l_{c} circulant dans la charge est un signal périodique, de fréquence de résonance fₒ telle que son double est supérieur à la fréquence de découpage fᵣ fr<2f₀, de telle sorte qu'à la fermeture des interrupteurs le courant est nul dans le circuit, ce mode de pilotage des interrupteurs du type hypo-discontinu étant obtenu à partir du rapport de transformation du transformateur et de l'inductance de résonance déterminés en fonction de la capacité équivalente de l'actuateur.

Selon une autre caractéristique, le procédé de pilotage électronique du dispositif de commande d'au moins un actuateur piézo-électrique ultrasonore, à partir d'un calculateur de contrôle qui comporte un convertisseur-élévateur de tension continue/alternative alimenté par une source de tension continue, dont la sortie haute tension est reliée à un circuit oscillant constitué de l'actuateur et d'une inductance de résonance, ledit convertisseur étant composé d'un montage avec au moins un transformateur à au moins un enroulement primaire relié à la source de tension par au moins un interrupteur commandable et un enroulement secondaire unique délivrant un signal alternatif d'excitation de l'actuateur piézo-électrique, est caractérisé en ce que :
- la tension V_{c} aux bornes de la charge constituée du transformateur, de l'inductance de résonance et de l'actuateur est un signal carré de fréquence de découpage fᵣ déterminée,
- le courant I_{c} circulant dans la charge est un signal périodique, en avance de phase avec la tension V_{c}, et de fréquence de résonance fₒ telle que la fréquence de découpage fᵣ est comprise entre la moitié de la fréquence de résonance et son double, fₒ/2<fr<2f₀, de telle sorte qu'il pilote la fermeture des interrupteurs à courant nul dans l'interrupteur de commande, ce mode de pilotage des interrupteurs du type hypo-continu étant obtenu à partir du rapport de transformation du transformateur et de l'inductance de résonance déterminés en fonction de la capacité équivalente de l'actuateur.

Selon une autre caractéristique, le procédé de pilotage électronique du dispositif de commande d'au moins un actuateur piézo-électrique ultrasonore, à partir d'un calculateur de contrôle qui comporte un convertisseur-élévateur de tension continue/alternative alimenté par une source de tension continue, dont la sortie haute tension est reliée à un circuit oscillant constitué de l'actuateur et d'une inductance de résonance, ledit convertisseur étant composé d'un montage avec au moins un transformateur à au moins un enroulement primaire relié à la source de tension par au moins un interrupteur commandable et un enroulement secondaire unique délivrant un signal alternatif d'excitation de l'actuateur piézo-électrique, est caractérisé en ce que :
- la tension V_{c} aux bornes de la charge constituée du transformateur, de l'inductance de résonance et de l'actuateur est un signal carré de fréquence de découpage fᵣ déterminée,
- le courant Ic circulant.dans la charge est un signal périodique, en retard de phase avec la tension V_{c}, et de fréquence de résonance fₒ telle que la fréquence de découpage fᵣ est supérieure à la moitié de la fréquence de résonance, fᵣ>f₀/2, de telle sorte qu'il pilote la fermeture des interrupteurs à tension nulle aux bornes de l'interrupteur de commande, ce mode de pilotage des interrupteurs du type hyper-continu étant obtenu à partir du rapport de transformation du transformateur et de l'inductance de résonance déterminés en fonction de la capacité équivalente de l'actuateur.

D'autres caractéristiques et avantages de l'invention apparaîtront à la lecture de la description de plusieurs modes de pilotage électronique d'un dispositif de commande d'un actionneur piézo-électrique ultrasonore, illustrée par les figures suivantes qui sont :
- la figure 1 : le schéma électronique d'un mode de réalisation d'un dispositif de commande séquentiel d'un groupe de quatre actuateurs piézo-électriques ultrasonores;
- les figures 2a et 2b : les variations temporelles de la tension de sortie du dispositif de commande et de la tension aux bornes d'un actuateur piézo-électrique ;
- la figure 3 : le schéma électronique d'un mode de réalisation d'un dispositif de commande en pont d'un actuateur piézo-électrique ;
- la figure 4a : la forme d'onde générée par le pilotage du dispositif de commande, en mode hypo-discontinu selon l'invention ;
- les figures 4b et 4d : les variations temporelles des tensions de commande aux bornes des transistors de pont, en mode hypo discontinu;
- les figures 4c et 4e : les représentations des tensions aux bornes des diodes du pont, en mode hypo-discontinu ;
- la figure 5a : la forme d'onde générée par le pilotage du dispositif de commande, en mode hypo-continu selon l'invention ;
- les figures 5b et 5d : les variations temporelles des tensions de commande aux bornes des transistors de pont, en mode hypo-continu ;
- les figures 5c et 5e : les représentations des tensions aux bornes des diodes du pont, en mode hypo continu ;
- la figure 6a : la forme d'onde générée par le pilotage du dispositif de commande, en mode hyper continu selon l'invention ;
- les figures 6b et 6d : les variations temporelles des tensions de commande aux bornes des transistors de pont, en mode hyper-continu ;
- les figures 6c et 6e : les représentations des tensions aux bornes des diodes du pont, en mode hyper-continu.

Pour ces exemples non limitatifs de modes de réalisation, les éléments portant les mêmes références sur les différentes figures remplissent les mêmes fonctions en vue des mêmes résultats.

L'invention consistant à générer un signal sinusoïdal haute tension, supérieure à une centaine de volts, et haute fréquence, supérieure à une dizaine de kilohertz, sur la cellule piézo-électrique de chaque injecteur de carburant d'un véhicule à partir d'une source de tension continue, soit la batterie, soit la sortie d'un convertisseur DC de puissance, elle propose le pilotage d'un dispositif de commande selon différentes topologies assurant l'excitation desdites céramiques piézo-électriques, à travers une inductance pour constituer un circuit résonant. Ces topologies sont décrites dans la demande de brevet précédemment citée. Ces structures sont valables de 1 à N injecteurs, N étant un entier préférentiellement égal à 4, 5, 6, 8, 10 ou 12. A titre d'exemple non limitatif, le nombre d'injecteurs commandés est 4 dans la description suivante.

Toutes les topologies décrites représentent des structures avec au moins un transformateur n'ayant qu'un seul enroulement au secondaire et un ou deux enroulements au primaire.

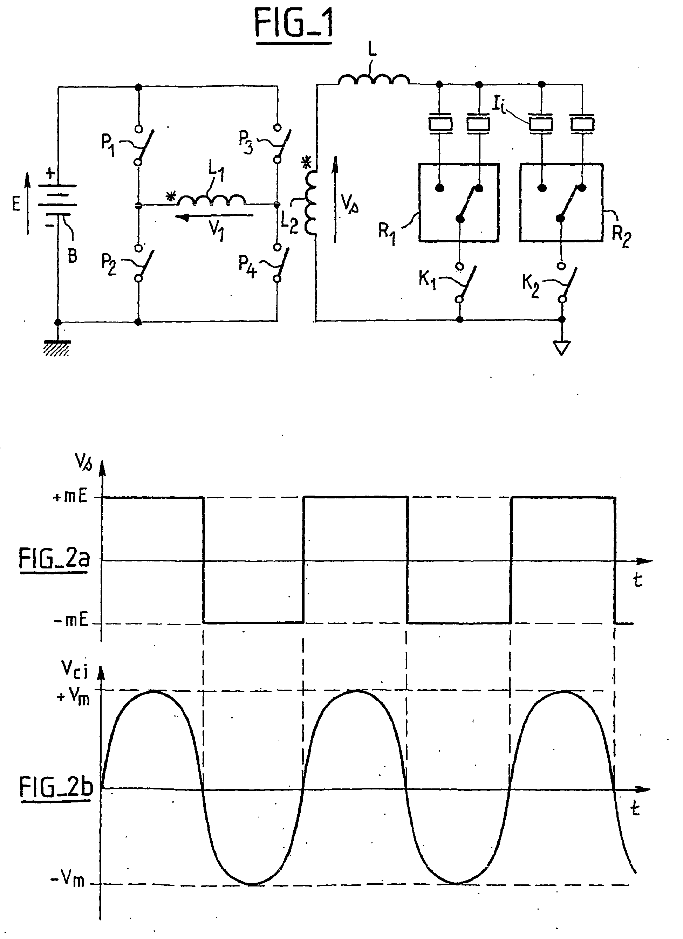

Selon le schéma de la figure 1 qui représente une structure non limitative avec un seul transformateur, le dispositif de commande d'un actuateur piézo-électrique Iᵢ ultrasonore parmi 4, i entier variant de 1 à 4, comporte une source B de tension continue E - une batterie ou la sortie d'un convertisseur DC-DC par exemple -, dont la borne (-) est reliée à la masse et dont la borne (+) est reliée à un montage en pont dont la charge du milieu est l'enroulement primaire L₁ d'un transformateur. Ce transformateur comprend deux enroulements bobinés autour d'un même noyau, comme le montrent les étoiles sur le schéma, un enroulement primaire L₁ et un enroulement secondaire L₂, dont la sortie haute tension Vₛ est reliée à un circuit oscillant constitué de la céramique piézo-électrique Iᵢ et d'une inductance L de résonance. Cette inductance de résonance est déterminée en fonction de la fréquence de fonctionnement de l'injecteur piézo-électrique. Elle peut être placée également au primaire du transformateur ou bien aussi constituée par l'inductance de fuite du transformateur.

Ce montage en pont est réalisé à partir de deux bras montés en parallèle aux bornes de la source de tension B et constitués chacun de deux interrupteurs de pont P₁ et P₂ en série commandables alternativement, respectivement P₃ et P₄, dont les points milieux J₁, respectivement J₂, sont reliés aux deux bornes de l'enroulement primaire L₁.

Dans le cas d'un moteur thermique de véhicule automobile nécessitant quatre injecteurs, le schéma représente quatre céramiques piézo-électriques I₁,..,, Iᵢ, ..., I₄ qui sont montées en parallèle et, selon un premier mode de réalisation, choisies successivement grâce à un interrupteur de sélection commandable Kᵢ monté en série avec chacune d'elles. Les quatre injecteurs Iᵢ sont reliés d'une part à l'inductance L de résonance destinée à constituer un circuit oscillant avec chaque injecteur successivement, et d'autre part deux à deux par un relais R₁ et R₂ respectivement, reliés chacun à une borne d'un interrupteur de sélection K₁ et K₂ respectivement, dont l'autre borne est reliée à la masse. Le calculateur d'injection pilote tout d'abord les relais puis simultanément les interrupteurs de sélection et de pont pour sélectionner l'injecteur à commander qui doit être ouvert pendant les intervalles d'activité pour assurer l'alimentation en carburant du cylindre correspondant du moteur.

Le fonctionnement de ce circuit de commande est le suivant, en fonction de la commande des différents interrupteurs. Dans une première phase, le signal de commande envoyé par le calculateur d'injection pilote d'une part la fermeture de l'interrupteur de sélection Kᵢ relié à l'injecteur Iᵢ choisi et d'autre part la fermeture simultanée des interrupteurs de pont P₁ et P₄, reliant-ainsi la borne J₁ de l'enroulement primaire L₁ à la borne (+) de la batterie B et sa borne J₂ à la borne (-) de la batterie. Pendant cet intervalle de temps entre les instants T₀ et T₁, la tension V₁ aux bornes de l'enroulement primaire L₁ est égale à +E, de sorte que la tension Vₛ aux bornes de l'enroulement secondaire L₂ est positive et égale à +mE par l'effet du rapport de transformation, pour permettre la charge à travers l'inductance de résonance L de l'actuateur Iᵢ sélectionné par l'interrupteur Kᵢ, piloté par le calculateur. Puis, dans une deuxième phase pendant l'intervalle de temps suivant entre les instants T₁ et T₂, le signal commande l'ouverture des interrupteurs P₁ et P₄ et la fermeture simultanée des deux interrupteurs P₂ et P₃, reliant ainsi la borne J₁ de l'enroulement primaire L₁ à la borne (-) de la batterie B et sa borne J₂ à la borne (+) et la tension v₁ à ses bornes négative est égale à -E. Ainsi, la tension Vₛ aux bornes de l'enroulement secondaire L₂ devient négative et égale à -mE. Ces deux phases sont répétées un grand nombre de fois pendant la durée d'injection, entre 100 µs et 8 ms. La tension périodique Vₛ aux bornes de l'enroulement secondaire L₂ en fonction du temps est représentée graphiquement sur la figure 2a. La tension V_{ci} aux bornes de l'injecteur Iᵢ est alors un signal sinusoïdal de même période que la tension Vₛ aux bornes de l'enroulement secondaire L₂, comme le montre la figure 2b, oscillant entre une valeur maximale +Vₘ et une valeur minimale -Vₘ. Le calculateur d'injection commande ensuite successivement les autres injecteurs Iᵢ montés en parallèle.

Pour l'excitation de l'injecteur I₁ entre les instants t₀ et t₁, le calculateur pilote la mise au repos du relais R₁ vers l'injecteur I₁ alors que le relais R₂ est en position repos, ainsi que la fermeture de l'interrupteur K₁ et l'ouverture de l'interrupteur K₂, dans le but de connecter l'actuateur I₁ à l'inductance L de résonance. Ainsi, entre les instants t₀ et t₁, la tension Vₛ aux bornes de l'enroulement secondaire L₂ est un signal périodique carré, oscillant entre les valeurs extrêmes +mE et -mE, et la tension V_{c1} aux bornes de l'actuateur I₁ est un signal sinusoïdal oscillant entre les valeurs extrêmes +mGE et -mGE, G étant le gain à la résonance entre l'inductance de résonance L et le modèle de l'injecteur, alors que les trois autres injecteurs ne reçoivent aucune tension. La durée T_{Ki} de fermeture de chaque interrupteur de sélection correspond au temps d'injection, pouvant varier entre 100 µs et 5 ms pour un moteur à quatre injecteurs. La période T_{Pi} du signal carré Vₛ aux bornes de l'enroulement secondaire de chaque transformateur dépend exclusivement de la structure des injecteurs, la fréquence F_{Pi} de résonance variant entre 10kHz et 1 MHz.

Le basculement de la position repos à la position travail d'un relais étant plus long que l'ouverture ou la fermeture d'un interrupteur, le calculateur pilote à l'instant t₂ le basculement du second relais R₂ en position travail dans le but de pouvoir exciter l'injecteur I₃, à l'instant suivant t₃.

A l'instant t₃, le relais R₂ est basculé vers la position travail alors que le relais R₂ est toujours basculé dans la position travail vers l'injecteur I₃, et simultanément l'interrupteur K₂ est fermé jusqu'à l'instant t₄ alors que l'interrupteur K₁ est ouvert depuis l'instant t₁, de sorte que la tension Vₛ aux bornes de l'enroulement secondaire L₃ provoque la résonance du circuit oscillant constitué par l'inductance L et l'injecteur I₃ auquel elle est alors connectée. Le signal de tension V_{c3} aux bornes de l'injecteur I₃ est une sinusoïde d'amplitude maximale mGE entre les instants suivants t₃ et t₄.

Entre les instants suivants t₅ et t₆, l'interrupteur K₁ est à nouveau fermé et l'interrupteur K₂ est ouvert, mais le relais R₁ est basculé vers l'injecteur I₂ donc sa commande est l'inverse de celle existant entre les instants t₀ et t₁. Ainsi, le signal de tension V_{c2} aux bornes de l'injecteur I₂ est une sinusoïde d'amplitude maximale mGE entre les instants suivants t₅ et t₆.

Entre les instants suivants t₇ et t₈, l'interrupteur K₂ est à nouveau fermé alors que l'interrupteur K₁ est ouvert, et les deux relais R₁ et R₂ sont en position repos, donc le relais R₂ est basculé vers l'injecteur I₄, et sa commande est l'inverse de celle existant entre les instants t₃ et t₄. Ainsi, le signal de tension V_{c4} aux bornes de l'injecteur I₄ est une sinusoïde d'amplitude maximale mGE entre les instants suivants t₇ et t₈.

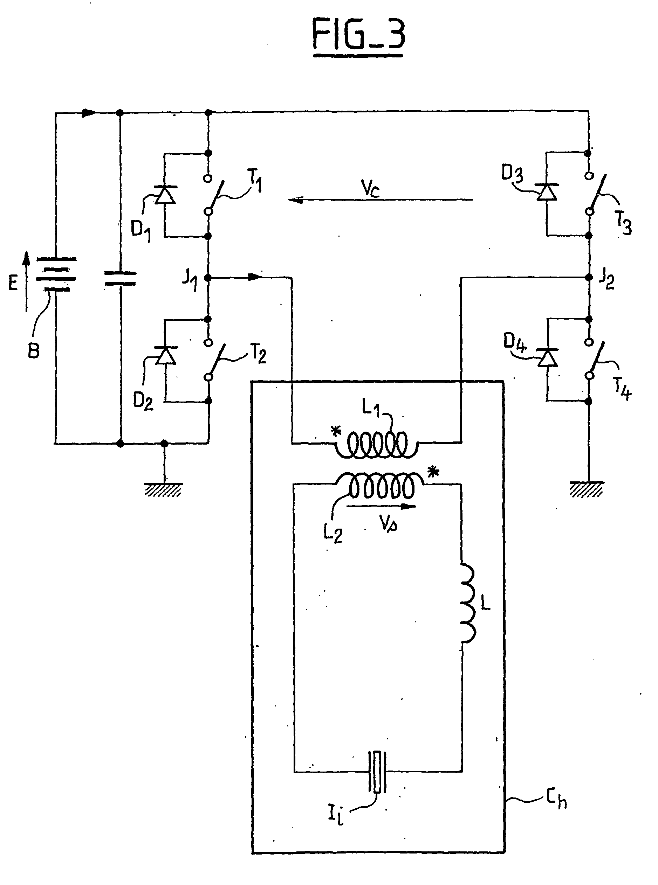

L'invention concerne précisément le pilotage des interrupteurs de commande du pont vis à vis de la charge Cₕ reliant les points milieux des deux bras de pont et qui est constituée du transformateur, de l'inductance de résonance et de l'actuateur, c'est-à-dire en fonction du courant I_{c} circulant dans cette charge et de la tension V_{c} à ses bornes. Sur l'exemple de réalisation de la figure 3, les interrupteurs de ponts Pᵢ sont réalisés chacun à partir d'un transistor Tᵢ et d'une diode Dᵢ montée en anti-parallèle. Pour que la tension périodique Vₛ aux bornes de l'enroulement secondaire du transformateur permette l'excitation de l'actuateur piézo-électrique Iᵢ, la tension V_{c} aux bornes de la charge doit être carrée, de fréquence de découpage fᵣ déterminée.

Selon, une première caractéristique de l'invention, la tension V_{c} aux bornes de la charge constituée du transformateur, de l'inductance de résonance et de l'actuateur étant un signal carré de fréquence de découpage fᵣ déterminée, le courant l_{c} circulant dans la charge est un signal périodique, de fréquence de résonance fₒ telle que la fréquence de découpage fᵣ est au moins deux fois plus faible qu'elle, fᵣ<2fₒ, de telle sorte qu'à la fermeture des interrupteurs le courant est nul dans le circuit. Ce mode de pilotage des interrupteurs de commande du type hypo-discontinu est obtenu à partir des valeurs du rapport de transformation du transformateur et de l'inductance de résonance déterminées en fonction de la valeur de la capacité équivalente de l'actuateur. Il permet de limiter les pertes par commutation des interrupteurs lors de leur fermeture et de limiter les effets de compatibilité électromagnétique par coupure de courant.

Le convertisseur-élévateur de tension continue/alternative est dimensionné pour que la fréquence de découpage fᵣ désirée pour piloter l'injecteur piézo-électrique soit inférieure au double de la fréquence de résonance de la charge.

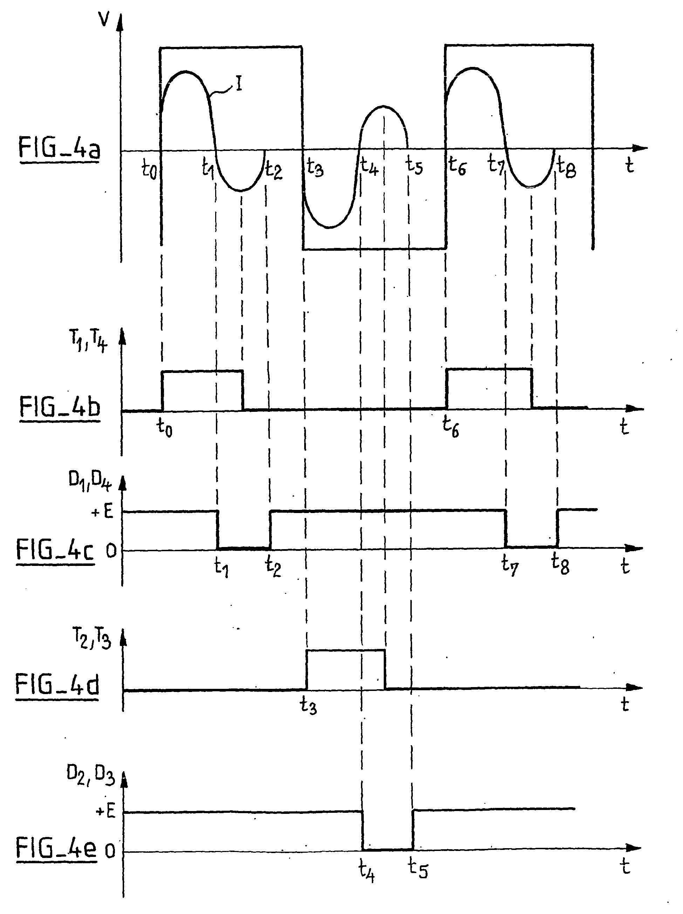

La figure 4a représente la forme d'onde générée par le pont du dispositif de commande, en mode hypo discontinu selon l'invention.

Pour la commande de l'actuateur donné I, le calculateur de contrôle pilote d'une part la fermeture des moyens de sélection reliés audit actuateur et d'autre part simultanément, dans une première phase la fermeture d'un premier couple d'interrupteurs de pont constitué d'un premier interrupteur T₁ du premier bras et d'un second interrupteur T₄ d'un second bras et l'ouverture du second couple formé des deux autres interrupteurs T₂ et T₃ desdits bras, et dans une seconde phase la commutation desdits quatre interrupteurs dans une position inverse de façon à obtenir une tension périodique aux bornes de l'enroulement secondaire du transformateur, ces deux phases étant répétées un nombre déterminé de fois pendant la durée de fonctionnement de l'actuateur pour générer un signal haute tension et haute fréquence sur l'actuateur piézo-électrique à partir de la source de tension continue.

Ainsi, le séquencement de pilotage des quatre interrupteurs du dispositif de commande est le suivant, lors de deux phases consécutives dont la première a lieu entre les instants t₀ et t₃ et la seconde a lieu entre les instants t₃ et t₆.
A l'instant t₀ de démarrage de la première phase, les transistors T₁ et T₄ sont commandés à la fermeture lorsque le courant Ic est nul dans les diodes D₁ et D₄.
Entre les instants t₀ et t₁, ces transistors T₁ et T₄ sont fermés laissant passer le courant I_{c}, pendant que les diodes D₁ et D₄ ne sont pas passantes, la tension à leurs bornes étant égale à +E.
A l'instant t₁, le courant I_{c} s'inverse, les deux diodes deviennent passantes, la tension à leurs bornes s'annule, et les deux transistors T₁ et T₄ sont commandés à l'ouverture entre cet instant t₁ et l'instant t₂ où les diodes ne conduisent plus, le courant s'annulant.
A l'instant t₃ de démarrage de la seconde phase, les transistors T₂ et T₃ sont commandés à la fermeture lorsque le courant I_{c} est nul dans les diodes D₂ et D₃.
Entre les instants t₃ et t₄, ces transistors T₂ et T₃ sont fermés laissant passer le courant I_{c}, pendant que les diodes D₂ et D₃ ne conduisent pas.
A l'instant t₄, le courant I_{c} s'inverse, les deux diodes deviennent passantes et les deux transistors T₂ et T₃ sont commandés à l'ouverture entre cet instant t₄ et l'instant t₅ où les diodes ne conduisent plus, le courant s'annulant à nouveau.

Les figures 4b et 4d représentent les variations temporelles des tensions de commande aux bornes des transistors de pont, et les figures 4c et 4e représentent les tensions aux bornes des diodes, montées en parallèle à ces transistors de pont, soit leur état passant ou non conducteur.

Selon, une deuxième caractéristique de l'invention, la tension V_{c} aux bornes de la charge constituée du transformateur, de l'inductance de résonance et de l'actuateur étant un signal carré de fréquence de découpage fᵣ déterminée, le courant I_{c} circulant dans la charge est un signal périodique, en avance de phase avec la tension V_{c}, et de fréquence de résonance fₒ telle que la fréquence de découpage fᵣ est comprise entre la moitié de la fréquence de résonance fₒ et son double, fₒ/2<fᵣ<2f₀, de telle sorte qu'il pilote l'ouverture des interrupteurs à courant nul dans l'interrupteur de commande, « zero current switching » ZCS. Ce mode de pilotage des interrupteurs de commande du type hypo-continu est obtenu à partir des valeurs du rapport de transformation du transformateur et de l'inductance de résonance déterminées en fonction de la valeur de la capacité équivalente de l'actuateur. Ce mode de pilotage des interrupteurs de commande étant du type hypo-continu, il permet de limiter les pertes par commutation des interrupteurs lors de leur ouverture et de limiter les effets de compatibilité électromagnétique par coupure de courant.

Le convertisseur-élévateur de tension continue/alternative est dimensionné pour que la fréquence de découpage fᵣ désirée pour piloter l'injecteur piézo-électrique respecte les conditions énoncées auparavant vis à vis de la fréquence de résonance fₒ.

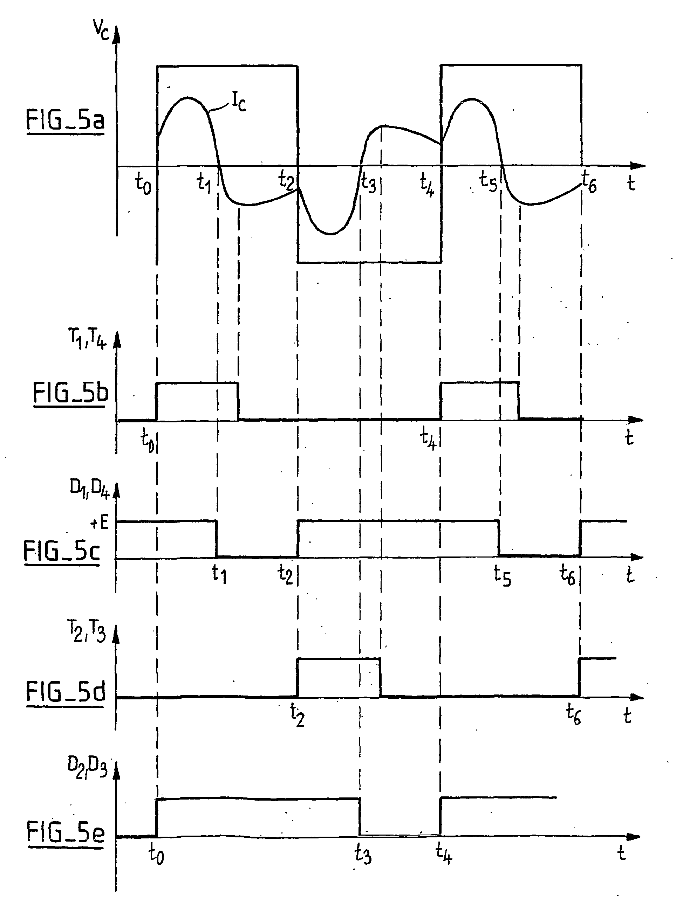

La figure 5a représente la forme d'onde générée par le pont du dispositif de commande, en mode hypo continu selon l'invention.

Le séquencement de pilotage des quatre interrupteurs T₁ à T₄ du dispositif de commande est le suivant lors de deux phases consécutives dont la première a lieu entre les instants t0 et t2 et la seconde a lieu entre les instants t₂ et t₄.

A l'instant t0, les transistors T₁ et T₄ sont commandés à la fermeture lorsque le courant I_{c} est nul dans les diodes D₁ et D₄ et que les autres diodes D₂ et D₃ sont passantes.
Entre les instants t₀ et t₁, ces transistors T₁ et T₄ sont fermés laissant passer le courant I_{c}, pendant que les quatre diodes D₁ à D₄ ne sont pas passantes.
A l'instant t₁, le courant I_{c} s'inverse, les deux diodes D₁ et D₄ deviennent passantes et les deux transistors T₁ et T₄ sont commandés à l'ouverture entre cet instant t1 et l'instant t₂ où il n'y a pas de courant dans ces deux transistors.
A ce même instant t₂, les transistors T₂ et T₃ sont commandés à la fermeture alors que les diodes D₁ et D₄ sont encore passantes. A cet instant de fermeture, les diodes D₁ et D₄ se bloquent naturellement et le courant I_{c} circule dans le même sens.
Entre les instants t₃ et t₄, le courant I_{c} s'inverse et les diodes D₂ et D₃ deviennent passantes et ces transistors T₂ et T₃ sont commandés pour être ouverts alors qu'il n'y a plus de courant Ic dans ces transistors.
A l'instant t₄, les deux transistors T₁ et T₄ sont commandés à la fermeture, les deux diodes D₂ et D₃ deviennent non passantes et le pilotage recommence selon le même séquencement qu'entre les instants t₀ et t₄.

Les figures 5b et 5d représentent les variations temporelles, en mode hypo-continu, des tensions de commande aux bornes des transistors de pont, et les figures 5c et 5e représentent les tensions aux bornes des diodes, montées en parallèle à ces transistors de pont, soit leur état passant ou non conducteur.

Selon, une troisième caractéristique de l'invention, la tension V_{c} aux bornes de la charge constituée du transformateur, de l'inductance de résonance et de l'actuateur étant un signal carré de fréquence de découpage fr déterminée, le courant Ic circulant dans la charge est un signal périodique, en retard de phase avec la tension V_{c}, et de fréquence de résonance fₒ telle que la fréquence de découpage fᵣ est supérieure à la moitié de la fréquence de résonance fₒ, fᵣ>f₀/2, de telle sorte qu'il pilote la fermeture des interrupteurs à tension nulle aux bornes de l'interrupteur de commande. Ce mode de pilotage des interrupteurs de commande du type hyper-continu est obtenu à partir des valeurs du rapport de transformation du transformateur et de l'inductance de résonance déterminées en fonction de la valeur de la capacité équivalente de l'actuateur. Ce mode de pilotage des interrupteurs de commande hyper-continu permet de limiter les pertes par commutation des interrupteurs lors de leur ouverture et de limiter les effets de compatibilité électromagnétique par commutation de tension. Ce mode de pilotage est du type à commande à la fermeture des interrupteurs ou « zero voltage switching » ZVC.

Le convertisseur-élévateur de tension continue/alternative est dimensionné pour que la fréquence de découpage fᵣ désirée pour piloter l'injecteur piézo-électrique respecte les conditions énoncées auparavant vis à vis de la fréquence de résonance fₒ.

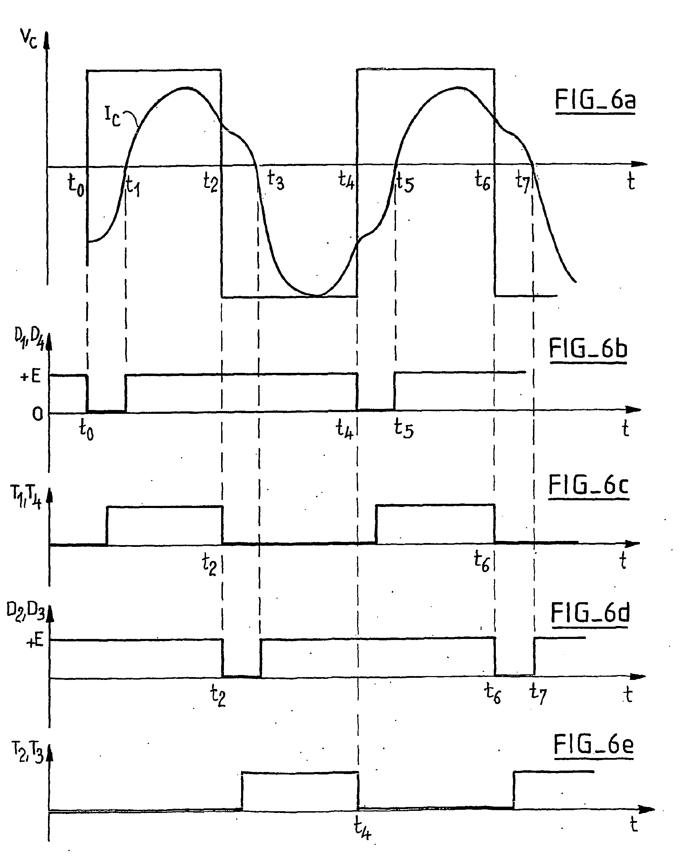

La figure 6a représente la forme d'onde générée par le pont du dispositif de commande, en mode hyper continu selon l'invention.

Le séquencement de pilotage des quatre interrupteurs du dispositif de commande est le suivant lors de deux phases consécutives dont la première a lieu entre les instants t₀ et t₂ et la seconde a lieu entre les instants t₂ et t₄.

Entre les instants t₀ et t₁, les transistors T₁ et T₄ sont commandés à la fermeture, alors que les deux diodes D₁ et D₂ sont passantes, donc qu'il n'y a pas de tension aux bornes de ces transistors. Les autres diodes D₂ et D₃ ne sont pas passantes et les deux transistors T₂ et T₃ sont ouverts.
A l'instant t₁, les diodes D₁ et D₄ sont bloquées.
Entre les instants t₁ et t₂, les deux transistors T₁ et T₄ sont encore fermés, laissant passer le courant l_{c}.
A l'instant t₂, les transistors T₁ et T₄ sont commandés à l'ouverture, les diodes D₂ et D₃ deviennent passantes et il n'y a plus de tension aux bornes des transistors T₂ et T₃. Les diodes D₁ et D₄ ne sont pas passantes.

Entre les instants t₂ et t₃, les transistors T₂ et T₃ sont commandés à la fermeture pour être ensuite commandés à l'ouverture à l'instant t₄.

Les figures 6c et 6e représentent les variations temporelles, en mode hyper-continu, des tensions de commande aux bornes des transistors de pont, et les figures 6b et 6d représentent les tensions aux bornes des diodes, montées en parallèle à ces transistors de pont, soit leur état passant ou non conducteur.

Selon une autre caractéristique de l'invention, le procédé de pilotage combine dans le temps les trois modes de pilotage des interrupteurs, de types hypo-discontinu, hypo-continu et hyper-continu, en fonction de la tension E de la batterie qui peut varier et la tension crête de consigne, du signal de pilotage des actuateurs piézo-électriques.

Les interrupteurs de sélection des actuateurs et des enroulements primaires des transformateurs sont commandables bidirectionnellement en courant, et pour cela peuvent être réalisés à partir de deux semi-conducteurs montés en série ou en parallèle. Ce peut être par exemple deux transistors de type MOSFET montés en série ou IGBT avec diode anti-parallèle.

Les relais R de sélection des actuateurs sont de type électromécanique, monostables et possédant un contact de repos et un contact de travail.

A propos des interrupteurs de pont, s'ils sont placés directement derrière la batterie, ils sont du type MOSFET à canal N de préférence pour leurs faibles chutes de tension. Dans le cas où ils sont placés derrière un convertisseur DC-DC, ces interrupteurs peuvent être de type MOSFET ou IGBT.

Quant aux interrupteurs de sélection des transformateurs, ils sont préférentiellement de type MOSFET à canal P, pour leurs faibles chutes de tension.

## Revendications

1. Procédé de pilotage électronique d'un dispositif de commande d'au moins un actuateur piézo-électrique ultrasonore, à partir d'un calculateur de contrôle, qui comporte un convertisseur-élévateur de tension continue/alternative alimenté par une source (B) de tension continue, dont la sortie haute tension est reliée à un circuit oscillant constitué de l'actuateur (lᵢ) et d'une inductance (L) de résonance, ledit convertisseur étant composé d'un montage avec au moins un transformateur à au moins un enroulement primaire relié à la source de tension par au moins un interrupteur commandable et un enroulement secondaire unique délivrant un signal alternatif d'excitation de l'actuateur piézo-électrique, et tel que la tension (V_{c}) aux bornes de la charge constituée du transformateur, de l'inductance de résonance et de l'actuateur est un signal carré de fréquence de découpage (fᵣ) déterminée, **caractérisé en ce que** le courant (l_{c}) circulant dans la charge est un signal périodique, de fréquence de résonance (fₒ) telle que la fréquence de découpage (fᵣ) est inférieure au double de la fréquence de résonance (fᵣ<2fₒ), de telle sorte qu'il pilote la fermeture des interrupteurs à courant nul dans le circuit, ce mode de pilotage des interrupteurs du type hypo-discontinu étant obtenu à partir du rapport de transformation du transformateur et de l'inductance de résonance déterminés en fonction de la capacité équivalente de l'actuateur.

2. Procédé de pilotage électronique du dispositif de commande d'au moins un actuateur piézo-électrique ultrasonore, selon la revendication 1
**caractérisé en ce que** le courant (I_{c}) circulant dans la charge est un signal périodique, en avance de phase avec la tension (V_{c}), et de fréquence de résonance (fₒ) telle que la fréquence de découpage (fᵣ) est comprise entre la moitié de la fréquence de résonance et son double, (fₒ/2<fr<2f₀), de telle sorte qu'il pilote la fermeture des interrupteurs à courant nul dans l'interrupteur de commande, ce mode de pilotage des interrupteurs du type hypo-continu étant obtenu à partir du rapport de transformation du transformateur et de l'inductance de résonance déterminés en fonction de la capacité équivalente de l'actuateur.

3. Procédé de pilotage électronique du dispositif de commande d'au moins un actuateur piézo-électrique ultrasonore, à partir d'un calculateur de contrôle qui comporte un convertisseur-élévateur de tension continue/alternative alimenté par une source de tension continue, dont la sortie haute tension est reliée à un circuit oscillant constitué de l'actuateur et d'une inductance de résonance, ledit convertisseur étant composé d'un montage avec au moins un transformateur à au moins un enroulement primaire relié à la source de tension par au moins un interrupteur commandable et un enroulement secondaire unique délivrant un signal alternatif d'excitation de l'actuateur piézo-électrique, et tel que la tension (V_{c}) aux bornes de la charge constituée du transformateur, de l'inductance de résonance et de l'actuateur est un signal carré de fréquence de découpage (fᵣ) déterminée, **caractérisé en ce que** le courant (I_{c}) circulant dans la charge est un signal périodique, en retard de phase avec la tension (V_{c}), et de fréquence de résonance (fₒ) telle que la fréquence de découpage (fᵣ) est supérieure à la moitié de la fréquence de résonance, (fᵣ>f₀/2), de telle sorte qu'il pilote la fermeture des interrupteurs à tension nulle aux bornes de l'interrupteur de commande, ce mode de pilotage des interrupteurs du type hyper-continu étant obtenu à partir du rapport de transformation du transformateur et de l'inductance de résonance déterminés en fonction de la capacité équivalente de l'actuateur.

4. Procédé de pilotage électronique du dispositif de commande d'au moins un actuateur piézo-électrique ultrasonore, comportant un convertisseur composé d'un montage en pont à au moins un transformateur, ayant au moins un enroulement primaire réalisé à partir d'un premier bras constitué de deux interrupteurs de pont (T₁,T₂) en série commandables alternativement et d'au moins un deuxième bras en parallèle avec le premier bras et constitué aussi de deux interrupteurs de pont (T₂,T₃) en série commandables alternativement, le point milieu du deuxième bras étant relié au point milieu du premier bras par une charge constituée du transformateur, d'une inductance (L) de résonance et de l'actuateur piézo-électrique, selon la revendication 1, **caractérisé en ce que** le séquencement de pilotage des quatre interrupteurs du convertisseur est le suivant :
au cours d'une première phase :
- à l'instant t₀, un premier transistor (T₁) du premier bras et un second interrupteur (T₂) du second bras constituant un premier couple sont commandés à la fermeture lorsque le courant (I_{c}) est nul dans les diodes (D₁ et D₄) en anti-parallèle ;
- entre les instants t₀ et t₁, les transistors (T₁ et T₄) du premier couple sont fermés laissant passer un courant (I_{c}), pendant que les diodes (D₁ et D₄) ne sont pas passantes et que le second transistor (T₂) du premier bras et le premier transistor du second bras (T₃) constituant un second couple sont ouverts ;
- à l'instant t₁, le courant (I_{c}) s'inverse, les deux diodes (D₁ et D₄) deviennent passantes et les deux transistors (T₁ et T₄) du premier couple sont commandés à l'ouverture entre cet instant t₁ et l'instant t₂ où les diodes (D₁ et D₄) ne conduisent plus, le courant s'annulant ;
au cours d'une seconde phase :
- à l'instant t₃, les transistors (T₂ et T₃) du second couple sont commandés à la fermeture lorsque le courant (I_{c}) est nul dans les diodes (D₂ et D₃) en anti-parallèle ;
- entre les instants t₃ et t₄, ces transistors (T₂ et T₃) sont fermés laissant passer le courant (I_{c}), pendant que les diodes (D₂ et D₃) ne conduisent pas et que les transistors (T₁ et T₄) du premier couple sont ouverts ;
- à l'instant t₄, le courant (I_{c}) s'inverse, les deux diodes (D₂ et D₃) deviennent passantes et les deux transistors (T₂ et T₃) sont commandés à l'ouverture entre cet instant t₄ et l'instant t₅ où les diodes ne conduisent plus, le courant s'annulant à nouveau,
ces deux phases étant répétées un nombre déterminé de fois pendant la durée de fonctionnement de l'actuateur pour générer un signal haute tension et haute fréquence sur l'actuateur piézo-électrique à partir de la source de tension continue.

5. Procédé de pilotage électronique du dispositif de commande d'au moins un actuateur piézo-électrique ultrasonore, comportant un convertisseur composé d'un montage en pont à au moins un transformateur, ayant au moins un enroulement primaire, réalisé à partir d'un premier bras constitué de deux interrupteurs de pont (T₁,T₂) en série commandables alternativement et d'au moins un deuxième bras en parallèle avec le premier bras et constitué aussi de deux interrupteurs de pont (T₂,T₃) en série commandables alternativement, le point milieu du deuxième bras étant relié au point milieu du premier bras par une charge constituée du transformateur, d'une inductance (L) de résonance et de l'actuateur piézo-électrique, selon la revendication 2, **caractérisé en ce que** le séquencement de pilotage des quatre interrupteurs du convertisseur est le suivant :
au cours d'une première phase :
- à l'instant t₀, un premier transistor (T₁) du premier bras et un second interrupteur (T₄) du second bras constituant un premier couple sont commandés à la fermeture lorsque le courant (I_{c}) est nul dans les diodes (D₁ et D₄) en anti-parallèle et que les autres diodes (D₂ et D₃) en anti-parallèle du second transistor (T₂) du premier bras et du premier transistor (T₃) du second bras sont passantes ;
- entre les instants t₀ et t₁, les transistors (T₁ et T₄) du premier couple sont fermés laissant passer le courant (I_{c}), pendant que les quatre diodes (D₁ à D₄) ne sont pas passantes ;
- à l'instant t₁, le courant (I_{c}) s'inverse, les deux diodes (D₁ et D₄) deviennent passantes et les deux transistors (T₁ et T₄) sont commandés à l'ouverture entre cet instant t₁ et l'instant t₂ où il n'y a pas de courant dans ces deux transistors ;
- à ce même instant t₂, les transistors (T₂ et T₃) du second couple sont commandés à la fermeture alors que les diodes (D₁ et D₄) sont encore passantes. A cet instant de fermeture, les diodes (D₁ et D₄) se bloquent naturellement et le courant (I_{c}) circule dans le même sens ;
- entre les instants t₃ et t₄, le courant (I_{c}) s'inverse et les diodes (D₂ et D₃) deviennent passantes et ces transistors (T₂ et T₃) sont commandés pour être ouverts alors qu'il n'y a plus de courant (I_{c}) dans ces transistors ;
- à l'instant t₄, les deux transistors (T₁ et T₄) sont commandés à la fermeture,
les deux diodes (D₂ et D₃) deviennent non passantes et le pilotage recommence selon le même séquencement qu'entre les instants t₀ et t₄.

6. Procédé de pilotage électronique du dispositif de commande d'au moins un actuateur piézo-électrique ultrasonore, comportant un convertisseur composé d'un montage en pont à au moins un transformateur, ayant au moins un enroulement primaire, réalisé à partir d'un premier bras constitué de deux interrupteurs de pont (T₁,T₂) en série commandables alternativement et d'au moins un deuxième bras en parallèle avec le premier bras et constitué aussi de deux interrupteurs de pont (T₂,T₃) en série commandables alternativement, le point milieu du deuxième bras étant relié au point milieu du premier bras par une charge constituée du transformateur, d'une inductance (L) de résonance et de l'actuateur piézo-électrique selon la revendication 3, **caractérisé en ce que** le séquencement de pilotage des quatre interrupteurs du convertisseur est le suivant :
au cours d'une première phase :
- entre les instants t₀ et t₁, un premier transistor (T₁) du premier bras et un second interrupteur (T₄) du second bras constituant un premier couple sont commandés à la fermeture, alors que les deux diodes (D₁ et D₂) en anti-parallèle et que les autres diodes (D₂ et D₃) en anti-parallèle du second transistor (T₂) du premier bras et du premier transistor (T₃) du second bras ne sont pas passantes et que les deux transistors (T₂ et T₃) sont ouverts ;
- à l'instant t1, les diodes (D₁ et D₄) du premier couple de transistors sont bloquées ;
- entre les instants t₁ et t₂, les deux transistors (T₁ et T₄) du premier couple sont encore fermés, laissant passer le courant (I_{c});
- à l'instant t₂, les transistors (T₁ et T₄) du premier couple sont commandés à l'ouverture, les diodes (D₂ et D₃) en anti-parallèle du second couple de transistors deviennent passantes et il n'y a plus de tension aux bornes des transistors (T₂ et T₃), les diodes (D₁ et D₄) ne sont pas passantes ;
- entre les instants t₂ et t₃, les transistors (T₂ et T₃) du second couple sont commandés à la fermeture pour être ensuite commandés à l'ouverture à l'instant t₄.

7. Procédé de pilotage électronique d'un dispositif de commande d'au moins un actuateur piézo-électrique ultrasonore, selon l'une des revendications 1 à 6, **caractérisé en ce qu'**il combine dans le temps les trois modes de pilotage des interrupteurs, de types hypo-discontinu, hypo-continu et hyper-continu, en fonction de la tension (E) de la batterie qui peut varier et la tension crête de consigne, du signal de pilotage des actuateurs piézo-électriques.

## Claims

1. Electronic control method for a device for controlling at least one ultrasonic piezoelectric actuator, based on a control computer, which comprises a DC/AC voltage boost converter fed by a DC voltage source (B), whose high voltage output is connected to an oscillating circuit constituted by the actuator (Iᵢ) and a resonance inductance (L), the said converter being composed of a circuit with at least one transformer having at least one primary winding connected to the voltage source by at least one controllable switch and a single secondary winding delivering an AC excitation signal for the piezoelectric actuator, and such that the voltage (V_{c}) across the terminals of the load constituted by the transformer, the resonance inductance and the actuator is a square signal of specified chopping frequency (fᵣ), **characterized in that** the current (I_{c}) flowing in the load is a periodic signal, of resonant frequency (fₒ) such that the chopping frequency (fᵣ) is less than double the resonant frequency (fᵣ < 2fₒ) such that it controls the closing of the switches at zero current in the circuit, this hypo-discontinuous control mode of the switches being obtained from the transformation ratio of the transformer and of the resonance inductance determined as a function of the equivalent capacitance of the actuator.

2. Electronic control method for the device for controlling at least one ultrasonic piezoelectric actuator according to Claim 1, **characterized in that** the current (I_{c}) flowing in the load is a periodic signal in phase advance with respect to the voltage (V_{c}), of resonant frequency (fₒ) such that the chopping frequency (fᵣ) is between half of the resonant frequency and double the resonant frequency (fₒ/2<fᵣ<2fₒ), such that it controls the closing of the switches at zero-current in the control switch, this hypo-continuous mode of controlling the switches being obtained on the basis of the transformation ratio of the transformer and of the resonance inductance determined as a function of the equivalent capacitance of the actuator.

3. Electronic control method for the device for controlling at least one ultrasonic piezoelectric actuator, based on a control computer which comprises a DC/AC voltage boost converter fed by DC voltage source, whose high voltage output is connected to an oscillating circuit constituted by the actuator and a resonance inductance, the said converter being composed of a circuit with at least one transformer having at least one primary winding connected to the voltage source by at least one controllable switch and a single secondary winding delivering an AC excitation signal for the piezoelectric actuator, and such that the voltage (Vc) across the terminals of the load constituted by the transformer, the resonance inductance and the actuator is a square signal of specified chopping frequency (fᵣ), **characterized in that** the current (I_{c}) flowing in the load is a periodic signal, having phase delay with respect to the voltage (V_{c}) and of resonant frequency (fₒ) such that the chopping frequency (fᵣ) is greater than half of the resonant frequency (fᵣ>fₒ/2), such that it controls the closing of the switches at zero voltage across the terminals of the control switch, this hyper-continuous mode of controlling the switches being obtained on the basis of the transformation ratio of the transformer and of the resonance inductance determined as a function of the equivalent capacitance of the actuator.

4. Electronic control method for the device for controlling at least one ultrasonic piezoelectric actuator, comprising a converter consisting of a bridge circuit having at least one transformer, having at least one primary winding produced from a first branch constituted by two bridge switches (T₁, T₂) in series that can be controlled alternately and at least a second branch in parallel with the first branch and also constituted by two bridge switches (T₂, T₃) in series that can be controlled alternately, the centre point of the second branch being connected to the centre point of the first branch by a load constituted by the transformer, a resonance inductance (L) and the piezoelectric actuator, according to claim 1, **characterized in that** the control sequencing of the four switches of the converter is as follows:
during a first phase:
- at time t₀, a first transistor (T₁) of the first branch and a second switch (T₂) of the second branch constituting a first pair are controlled to close when the current (I_{c}) is zero in the diodes (D₁ and D₄) in antiparallel;
- between times t₀ and t₁, the transistors (T₁ and T₄) of the first pair are closed allowing a current (I_{c}) to pass, whilst the diodes (D₁ and D₄) are not conducting and whilst the second transistor (T₂) of the first branch and the first transistor of the second branch (T₃) constituting a second pair are open;
- at time t₁, the current I_{c} reverses, the two diodes (D₁ and D₄) become conducting and the two transistors (T₁ and T₄) of the first pair are controlled to open between this time t₁ and the time t₂ when the diodes (D₁ and D₄) are no longer conducting, the current being reduced to zero;
during a second phase:
- at time t₃, the transistors (T₂ and T₃) of the second pair are controlled to close when the current (I_{c}) is zero in the diodes (D₂ and D₃) in antiparallel;
- between times t₃ and t₄, these transistors (T₂ and T₃) are closed allowing the current (I_{c}) to pass, whilst the diodes (D₂ and D₃) are not conducting and whilst the transistors (T₁ and T₄) of the first pair are open;
- at time t₄, the current (I_{c}) reverses, the diodes (D₂ and D₃) become conducting and the two transistors (T₂ and T₃) are controlled to open between this time t₄ and the time t₅ when the diodes are no longer conducting, the current again being reduced to zero, these two phases being repeated a specific number of times during the operating period of the actuator in order to generate a high voltage and high frequency signal on the piezoelectric actuator from the DC voltage source.

5. Electronic control method for the device for controlling at least one ultrasonic piezoelectric actuator, comprising a converter composed of a bridge circuit having at least one transformer, having at least one primary winding, produced from a first branch constituted by two bridge switches (T₁, T₂) in series that can be controlled alternately and at least a second branch in parallel with the first branch and also constituted by two bridge switches (T₂, T₃) in series that can be controlled alternately, the centre point of the second branch being connected to the centre point of the first branch by a load constituted by the transformer, a resonance inductance (L) and the piezoelectric actuator, according to claim 2, **characterized in that** the control sequencing of the four switches of the converter is as follows:
during a first phase:
- at time t₀, a first transistor (T₁) of the first branch and a second switch (T₄) of the second branch constituting a first pair are controlled to close when the current (I_{c}) is zero in the diodes (D₁ and D₄) in antiparallel and the other diodes (D₂ and D₃) in antiparallel of the second transistor (T₂) of the first branch and of the first transistor (T₃) of the second branch are conducting;
- between the times t₀ and t₁, the transistors (T₁ and T₄) of the first pair are closed allowing the current (I_{c}) to pass whilst the four diodes (D₁ to D₄) are not conducting;
- at time t₁, the current (I_{c}) reverses, the two diodes (D₁ and D₄) become conducting and the two transistors (T₁ and T₄) are controlled to open between this time t₁ and the time t₂ when there is no current in these two transistors;
- at this same time t₂, the transistors (T₂ and T₃) of the second pair are controlled to close whilst the diodes (D₁ and D₄) are sill conducting. At this moment of closure, the diodes (D₁ and D₄) cut off naturally and
the current (I_{c}) flows in the same direction;
- between the times t₃ and t₄, the current (I_{c}) reverses and the diodes (D₂ and D₃) become conducting and these transistors (T₂ and T₃) are controlled to be open whilst there is no longer any current (I_{c}) in these transistors;
- at the time t₄, the two transistors (T₁ and T₄) are controlled to close, the two diodes (D₂ and D₃) become non-conducting and the control starts again according to the same sequencing as between the times t₀ and t₄.

6. Electronic control method for the device for controlling at least one ultrasonic piezoelectric actuator, comprising a converter composed of a bridge circuit having at least one transformer, having at least one primary winding, produced from a first branch constituted by two bridge switches (T₁, T₂) in series that can be controlled alternately and at least a second branch in parallel with the first branch and also constituted by two bridge switches (T₂, T₃) in series that can be controlled alternately, the centre point of the second branch being connected to the centre point of the first branch by a load constituted by the transformer, a resonance inductance (L) and the piezoelectric actuator according to claim 3, **characterized in that** the control sequencing of the four switches of the converter is as follows:
during a first phase:
- between the times t₀ and t₁, a first transistor (T₁) of the first branch and a second switch (T₄) of the second branch constituting a first pair are controlled to close whilst the two diodes (D₁ and D₂) in antiparallel and the other diodes (D₂ and D₃) in antiparallel of the second transistor (T₂) of the first branch and of the first transistor (T₃) of the second branch are not conducting and the two transistors (T₂ and T₃) are open;
- at the time t₁, the diodes (D₁ and D₄) of the first pair of transistors are cut off;
- between the times t₁ and t₂, the two transistors (T₁ and T₄) of the first pair are still closed, allowing the current (I_{c}) to pass;
- at time t₂, the transistors (T₁ and T₄) of the first pair are controlled to open, the diodes (D₂ and D₃) in antiparallel of the second pair of transistors become conducting and there is no longer any voltage across the terminals of the transistors (T₂ and T₃), the diodes (D₁ and D₄) are not conducting;
- between the times t₂ and t₃, the transistors (T₂ and T₃) of the second pair are controlled to close in order then to be controlled to open at time t₄.

7. Electronic control method for a device for controlling at least one ultrasonic piezoelectric actuator according to one of claims 1 to 6, **characterized in that** it combines in time the three modes of controlling the switches, of the hypo-discontinuous, hypo-continuous and hyper-continuous types, as a function of the voltage (E) of the battery which can vary and the peak command voltage of the control signal of the piezoelectric actuators.

## Patentansprüche

1. Verfahren zur elektronischen Steuerung einer Steuervorrichtung mindestens eines piezoelektrischen Ultraschallaktors ausgehend von einem Kontrollrechner, der einen Gleichspannungs-/Wechselspannungs-Wandler/Erhöher aufweist, der von einer Gleichspannungsquelle (B) gespeist wird, deren Hochspannungsausgang mit einem Schwingkreis verbunden ist, der aus dem Aktor (Iᵢ) und einer Resonanzinduktivität (L) gebildet wird, wobei der Wandler aus einer Schaltung mit mindestens einem Transformator mit mindestens einer Primärwicklung, die mit der Spannungsquelle über mindestens einen steuerbaren Unterbrecher verbunden ist, und einer einzigen Sekundärwicklung gebildet wird, die ein Wechselstromsignal zur Anregung des piezoelektrischen Aktors liefert, und derart, dass die Spannung (V_{c}) an den Klemmen der Last, die aus dem Transformator, der Resonanzinduktivität und dem Aktor besteht, ein Rechtecksignal mit einer bestimmten Pendelfrequenz (fᵣ) ist, **dadurch gekennzeichnet, dass** der in der Last fließende Strom (I_{c}) ein periodisches Signal mit einer derartigen Resonanzfrequenz (f₀) ist, dass die Pendelfrequenz (fᵣ) niedriger als das Doppelte der Resonanzfrequenz ist (fᵣ<2f₀), so dass er das Schließen der Unterbrecher bei Nullstrom in der Schaltung steuert, wobei dieser Steuerungsmodus der Unterbrecher vom Typ hypo-diskontinuierlich ausgehend vom Transformationsverhältnis des Transformators und der Resonanzinduktivität erhalten wird, die in Abhängigkeit von der äquivalenten Kapazität des Aktors bestimmt werden.

2. Verfahren zur elektronischen Steuerung der Steuervorrichtung mindestens eines piezoelektrischen Ultraschallaktors nach Anspruch 1, **dadurch gekennzeichnet, dass** der in der Last fließende Strom (I_{c}) ein periodisches Signal mit Phasenvoreilung bezüglich der Spannung (V_{c}) und mit einer derartigen Resonanzfrequenz (f₀) ist, dass die Pendelfrequenz (fᵣ) zwischen der Hälfte der Resonanzfrequenz und ihrem Doppelten liegt (f₀/2<fᵣ<2f₀), so dass er das Schließen der Unterbrecher bei Nullstrom im Steuerschalter steuert, wobei dieser Steuermodus der Unterbrecher vom Typ hypo-kontinuierlich ausgehend vom Transformationsverhältnis des Transformators und der Resonanzinduktivität erhalten wird, die in Abhängigkeit von der äquivalenten Kapazität des Aktors bestimmt werden.

3. Verfahren zur elektronischen Steuerung einer Steuervorrichtung mindestens eines piezoelektrischen Ultraschallaktors ausgehend von einem Kontrollrechner, der einen Gleichspannungs-/Wechselspannungs-Wandler/Erhöher aufweist, der von einer Gleichspannungsquelle gespeist wird, deren Hochspannungsausgang mit einem Schwingkreis verbunden ist, die aus dem Aktor und einer Resonanzinduktivität gebildet wird, wobei der Wandler aus einer Schaltung mit mindestens einem Transformator mit mindestens einer Primärwicklung, die mit der Spannungsquelle über mindestens einen steuerbaren Unterbrecher verbunden ist, und einer einzigen Sekundärwicklung gebildet wird, die ein Wechselstromsignal zur Anregung des piezoelektrischen Aktors liefert, und derart, dass die Spannung (V_{c}) an den Klemmen der Last, die aus dem Transformator, der Resonanzinduktivität und dem Aktor besteht, ein Rechtecksignal mit bestimmter Pendelfrequenz (fᵣ) ist, **dadurch gekennzeichnet, dass** der in der Last fließende Strom (I_{c}) ein periodisches Signal ist, mit Phasenverzögerung bezüglich der Spannung (V_{c}) und mit einer derartigen Resonanzfrequenz (f₀), dass die Pendelfrequenz (fᵣ) höher ist als die Hälfte der Resonanzfrequenz (fᵣ>f₀/2), so dass er das Schließen der Unterbrecher bei Nullspannung an den Klemmen des Steuerschalters steuert, wobei dieser Steuermodus der Unterbrecher vom hyperkontinuierlichen Typ ausgehend vom Transformationsverhältnis des Transformators und der Resonanzinduktivität erhalten wird, die in Abhängigkeit von der äquivalenten Kapazität des Aktors bestimmt werden.

4. Verfahren zur elektronischen Steuerung der Steuervorrichtung mindestens eines piezoelektrischen Ultraschallaktors, mit einem Wandler, der aus einem Brückenbetrieb mit mindestens einem Transformator besteht, der mindestens eine Primärwicklung hat, die ausgehend von einem ersten Arm, der aus zwei Brückenunterbrechern (T₁, T₂) in Reihe besteht, die alternativ steuerbar sind, und aus mindestens einem zweiten Arm parallel zum ersten Arm hergestellt wird, der auch aus zwei Brückenunterbrechern (T₂, T₃) in Reihe besteht, die alternativ steuerbar sind, wobei der Mittenpunkt des zweiten Arms mit dem Mittenpunkt des ersten Arms durch eine Last verbunden ist, die aus dem Transformator, einer Resonanzinduktivität (L) und dem piezoelektrischen Aktor besteht, nach Anspruch 1, **dadurch gekennzeichnet, dass** die Steuerungsreihenfolge der vier Unterbrecher des Wandlers folgendermaßen ist:
während einer ersten Phase:
- werden im Zeitpunkt t₀ ein erster Transistor (T₁) des ersten Arms und ein zweiter Unterbrecher (T₂) des zweiten Arms, die ein erstes Paar bilden, in Schließrichtung gesteuert, wenn der Strom (I_{c}) in den antiparallel geschalteten Dioden (D₁ und D₄) Null ist;
- sind zwischen den Zeitpunkten t₀ und t₁ die Transistoren (T₁ und T₄) des ersten Paars geschlossen und lassen einen Strom (I_{c}) durch, während die Dioden (D₁ und D₄) nicht leitend sind und der zweite Transistor (T₂) des ersten Arms und der erste Transistor des zweiten Arms (T₃), die ein zweites Paar bilden, offen sind;
- kehrt der Strom (I_{c}) im Zeitpunkt t₁ um, die zwei Dioden (D₁ und D₄) werden leitend und die zwei Transistoren (T₁ und T₄) des ersten Paars werden zwischen diesem Zeitpunkt t₁ und dem Zeitpunkt t₂, in dem die Dioden (D₁ und D₄) nicht mehr leiten, in Öffnungsrichtung gesteuert, wobei der Strom zu Null wird;
während einer zweiten Phase:
- werden im Zeitpunkt t₃ die Transistoren (T₂ und T₃) des zweiten Paars in Schließrichtung gesteuert, wenn der Strom (I_{c}) in den antiparallel geschalteten Dioden (D₂ und D₃) Null ist;
- sind zwischen den Zeitpunkten t₃ und t₄ diese Transistoren (T₂ und T₃) leitend und lassen den Strom (I_{c}) durch, während die Dioden (D₂ und D₃) nicht leiten und die Transistoren (T₁ und T₄) des ersten Paars offen sind;
- kehrt der Strom (I_{c}) im Zeitpunkt t₄ um, die zwei Dioden (D₂ und D₃) werden leitend, und die zwei Transistoren (T₂ und T₃) werden zwischen diesem Zeitpunkt t₄ und dem Zeitpunkt t₅, in dem die Dioden nicht mehr leiten, in Öffnungsrichtung gesteuert, wobei der Strom erneut zu Null wird,
wobei diese beiden Phasen eine vorbestimmten Anzahl von Zyklen während der Betriebsdauer des Aktors wiederholt werden, um ein Hochspannungssignal im piezoelektrischen Aktor ausgehend von der Gleichspannungsquelle zu erzeugen.

5. Verfahren zur elektronischen Steuerung der Steuervorrichtung mindestens eines piezoelektrischen Ultraschallaktors, mit einem Wandler, der aus einer Brückenschaltung mit mindestens einem Transformator besteht, der mindestens eine Primärwicklung hat, die ausgehend von einem ersten Arm, der aus zwei Brückenunterbrechern (T₁, T₂) in Reihe besteht, die alternativ steuerbar sind, und aus mindestens einem zweiten Arm parallel zum ersten Arm gebildet wird, der auch aus zwei Brückenunterbrechern (T₂, T₃) in Reihe besteht, die alternativ steuerbar sind, wobei der Mittenpunkt des zweiten Arms mit dem Mittenpunkt des ersten Arms über eine Last verbunden ist, die aus dem Transformator, einer Resonanzinduktivität (L) und dem piezoelektrischen Aktor besteht, nach Anspruch 2, **dadurch gekennzeichnet, dass** die Steuerungsreihenfolge der vier Unterbrecher des Wandlers folgendermaßen ist:
während einer ersten Phase:
- werden im Zeitpunkt t₀ ein erster Transistor (T₁) des ersten Arms und ein zweiter Unterbrecher (T₄) des zweiten Arms, die ein erstes Paar bilden, in Schließrichtung gesteuert, wenn der Strom (I_{c}) in den antiparallel geschalteten Dioden (D₁ und D₄) Null ist und die anderen antiparallel geschalteten Dioden (D₂ und D₃) des zweiten Transistors (T₂) des ersten Arms und des ersten Transistors (T₃) des zweiten Arms leitend sind;
- sind zwischen den Zeitpunkten t₀ und t₁ die Transistoren (T₁ und T₄) des ersten Paars geschlossen und lassen den Strom (I_{c}) durch, während die vier Dioden (D₁ bis D₄) nicht leitend sind;
- kehrt der Strom (I_{c}) im Zeitpunkt t₁ um, die zwei Dioden (D₁ und D₄) werden leitend, und die zwei Transistoren (T₁ und T₄) werden zwischen diesem Zeitpunkt t₁ und dem Zeitpunkt t₂, in dem es keinen Strom in diesen zwei Transistoren gibt, in Öffnungsrichtung gesteuert;
- werden in diesem gleichen Zeitpunkt t₂ die Transistoren (T₂ und T₃) des zweiten Paars in Schließrichtung gesteuert, während die Dioden (D₁ und D₄) noch leitend sind; in diesem Schließzeitpunkt blockieren die Dioden (D₁ und D₄) sich natürlich und der Strom (I_{c}) fließt in der gleichen Richtung;
- kehrt der Strom (I_{c}) zwischen den Zeitpunkten t₃ und t₄ um, und die Dioden (D₂ und D₃) werden leitend, und diese Transistoren (T₂ und T₃) werden gesteuert, um offen zu sein, während es keinen Strom (I_{c}) mehr in diesen Transistoren gibt;
- werden im Zeitpunkt t₄ die zwei Transistoren (T₁ und T₄) in Schließrichtung gesteuert, die zwei Dioden (D₂ und D₃) werden nicht leitend, und die Steuerung beginnt erneut gemäß der gleichen Steuerungsreihenfolge wie zwischen den Zeitpunkten t₀ und t₁.

6. Verfahren zur elektronischen Steuerung der Steuervorrichtung mindestens eines piezoelektrischen Ultraschallaktors, mit einem mit einem Wandler, der aus einer Brückenschaltung mit mindestens einem Transformator besteht, der mindestens eine Primärwicklung hat, die ausgehend von einem ersten Arm, der aus zwei Brückenunterbrechern (T₁, T₂) in Reihe besteht, die alternativ steuerbar sind, und aus mindestens einem zweiten Arm parallel zum ersten Arm gebildet wird, der auch aus zwei Brückenunterbrechern (T₂, T₃) in Reihe besteht, die alternativ steuerbar sind, wobei der Mittenpunkt des zweiten Arms mit dem Mittenpunkt des ersten Arms über eine Last verbunden ist, die aus dem Transformator, einer Resonanzinduktivität (L) und dem piezoelektrischen Aktor besteht, nach Anspruch 3, **dadurch gekennzeichnet, dass** die Steuerungsreihenfolge der vier Unterbrecher des Wandlers folgendermaßen ist:
während einer ersten Phase:
- werden zwischen den Zeitpunkten t₀ und t₁ ein erster Transistor (T₁) des ersten Arms und ein zweiter Unterbrecher (T₄) des zweiten Arms, die ein erstes Paar bilden, in Schließrichtung gesteuert, während die zwei antiparallel geschalteten Dioden (D₁ und D₂) und die anderen antiparallel geschalteten Dioden (D₂ und D₃) des zweiten Transistors (T₂) des ersten Arms und des ersten Transistors (T₃) des zweiten Arms nicht leitend sind und die zwei Transistoren (T₂ und T₃) offen sind;
- sind im Zeitpunkt t₁ die Dioden (D₁ und D₄) des ersten Paars von Transistoren blockiert;
- sind zwischen den Zeitpunkten t₁ und t₂ die zwei Transistoren (T₁ und T₄) des ersten Paars noch geschlossen und lassen den Strom (I_{c}) durch;
- werden im Zeitpunkt t₂ die Transistoren (T₁ und T₄) des ersten Paars in Öffnungsrichtung gesteuert, werden die antiparallel geschalteten Dioden (D₂ und D₃) des zweiten Paars von Transistoren leitend und gibt es keine Spannung mehr an den Klemmen der Transistoren (T₂ und T₃), die Dioden (D₁ und D₄) sind nicht leitend;
- werden zwischen den Zeitpunkten t₂ und t₃ die Transistoren (T₂ und T₃) des zweiten Paars in Schließrichtung gesteuert, um anschließend im Zeitpunkt t₄ in Öffnungsrichtung gesteuert zu werden.

7. Verfahren zur elektronischen Steuerung einer Steuervorrichtung mindestens eines piezoelektrischen Ultraschallaktors nach einem der Ansprüche 1 bis 6, **dadurch gekennzeichnet, dass** es die drei Steuermodi der Unterbrecher vom Typ hypo-diskontinuierlich, hypo-kontinuierlich und hyperkontinuierlich zeitlich in Abhängigkeit von der Spannung (E) der Batterie, die variieren kann, und der Spitzenspannung des Steuersignals der piezoelektrischen Aktoren kombiniert.
